# EUROPEAN PATENT APPLICATION

(11) **EP 2 026 274 A1**
(43) Date of publication of application: **18.02.2009**
(21) Application number: 08013223.6
(22) Date of filing: 23.07.2008
(51) Int. Cl.: G06Q 30/00

(54) **Commercial new E-paper system**

(30) Priority: 09.08.2007 IL 18514407
(71) Applicant: Deutsche Telekom AG, 53113 Bonn (DE)
(72) Inventor: Shapira, Bracha, Beer-Sheva 84728 (IL); Shoval, Peretz, Omer 84965 (IL); Maidel, Veronica, Rishon Le Tsion 75575 (IL)
(74) Representative: Flaccus, Rolf-Dieter

(57) **Abstract**

A system for aggregating commercial news and for delivering desired content to a user, which comprises a Content Manager, Personalization, Content Adaptation, Content Delivery, Systems Management and the client mobile device application/infrastructure (Client System). The Content Management subsystem handles news items from the point of retrieval from external news sources, up to the point they are ready to be personalized and delivered to the user.

## Description

### Field of the Invention

The present invention relates to the field of information. More particularly the invention relates to a system that aggregates commercial news in a manner that can be personalized on a user-by-user basis.

### Background of the Invention

In current days of information overflow there is a need for collecting information from various sources, in real time. Unfortunately, the process of obtaining on-line information from a plurality of sources is laborious and time-consuming, and the result is usually not in convenient reading form, as current time people are used to reading news and other informative items in printed and conventional formats.

There is therefore a need for a system that aggregates commercial and other news and personalizes it according to the reader's preferences in order to provide a news reading experience that resembles the offline world with the benefits of the online world. There is further a need for a system that is capable of aggregating news from multiple different sources and to handle different news formats.

### Summary of the Invention

The present invention, which will be referred to hereinafter also as "ePaper system", overcomes the abovementioned problems and provides a solution to the prior art problems. The invention is an aggregator for commercial news aimed to provide subscribed users with a personalized news reading experience that resembles the offline world with the benefits of the online world. The system of the invention aggregates news from multiple different sources handling different news formats. News collected is indexed to become accessible by readers. News readers, which are the system users, use a mobile device application designed to provide a smooth reading experience as well as optimized information delivery.

News indexing involves a few "intelligent" processes involving the classification and indexing of semi-structured news to a pre-defined ontology, the identification and clustering of similar news items, the basic archiving of news, and the adaptation of multimedia objects based on different user devices capabilities. All these capabilities help streamline the news flow to the user with the same effectiveness that real editorial system provides.

An essential aspect of the invention, as will become more apparent from the description to follow, is how the system personalizes news content for each user. Personalization is achieved using content-based and collaborative filtering algorithms. Both algorithms are based on the tracking of users, a capability that is embedded within the system and that allow it to send to the user the most "relevant" news at every specific point in time.

The system supports explicit user subscriptions to specific information categories and ontology-based concepts, and implicit tracking of the areas of interests of the user. The content-based profile collected on the user is anchored on NewsCodes (http://www.iptc.org/NewsCodes/), which is the selected ontology for describing the information space of news. Besides personalized content flow to the user, the system provides users with services such as delivery of standard editions of newspapers, browsing in the repository of news items, personalized ads delivery, and favorite news management.

To manage the variety and constraints of different mobile devices, the system supports dynamic content adaptation mechanisms based on the device the user owns, the user preferences and the local customizations made by each user. This way the presentation of content functionality is loosely coupled by the content preparation process, a capability which helps scale the number and variety of devices supporting this service.

The mobile application (client side) is capable of running on a pervasively used Java virtual machine, which enables the system to be deployable across various devices that exist today and others that will be developed in the future. The system also supports smooth mobile application deployment, to enable rapid bug fixes as well immediate feature releases.

Users are able to subscribe to a personalized edition, and to several "standard" newspaper editions available, where personalization is not active and an electronic edition of the selected newspapers is delivered to the user's mobile device. The content delivery subsystem provides the content link from the system to the mobile device and it can be tuned during runtime to deliver content in either "push" or "pull" mode. This flexibility enables the operator of the system to assign a device category to a specific content delivery method and thus to either push content or let the users pull it. This method tackles efficiently the problem resulting from local network congestions and known mobile devices constraints.

The system of the invention is designed to be fully configurable through all dimensions. This configurability is part of a full system level layer, where system level services are provided to the sub-systems as well as to the system administrator in the IT department, which permits to make sure that the system operates flawlessly during production time. System level services include, *inter alia*: system logging, records management, reporting, and configuration management

### Brief Description of the Drawings

In the drawings:

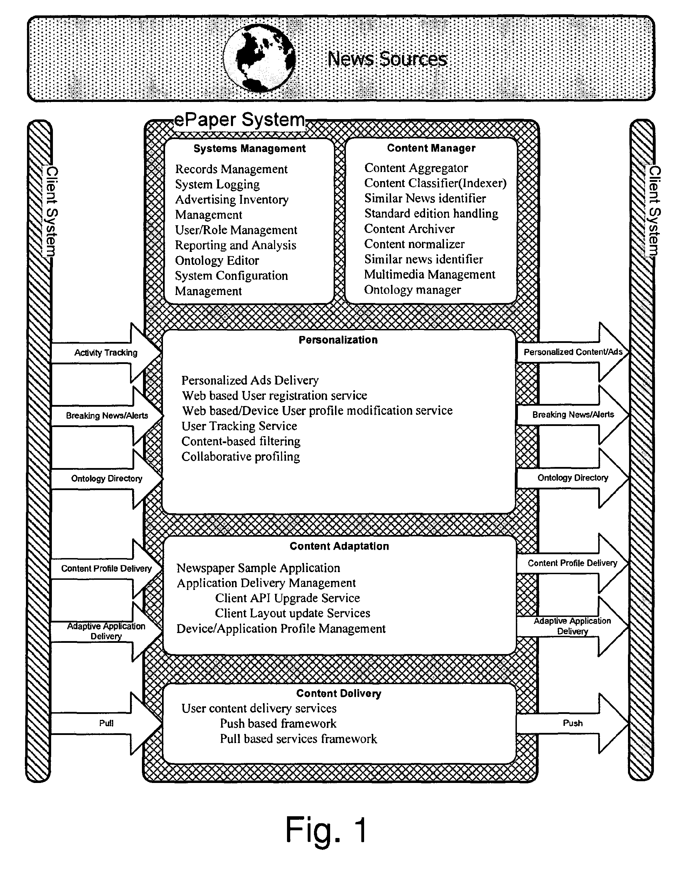

Fig. 1 is a schematic representation of the system architecture according to a preferred embodiment of the invention;
Fig. 2 is a schematic representation of the architecture of the Content Management module;
Fig. 3 is a schematic representation of the Content Adaptation module;
Fig. 4 is a schematic representation of Client System;

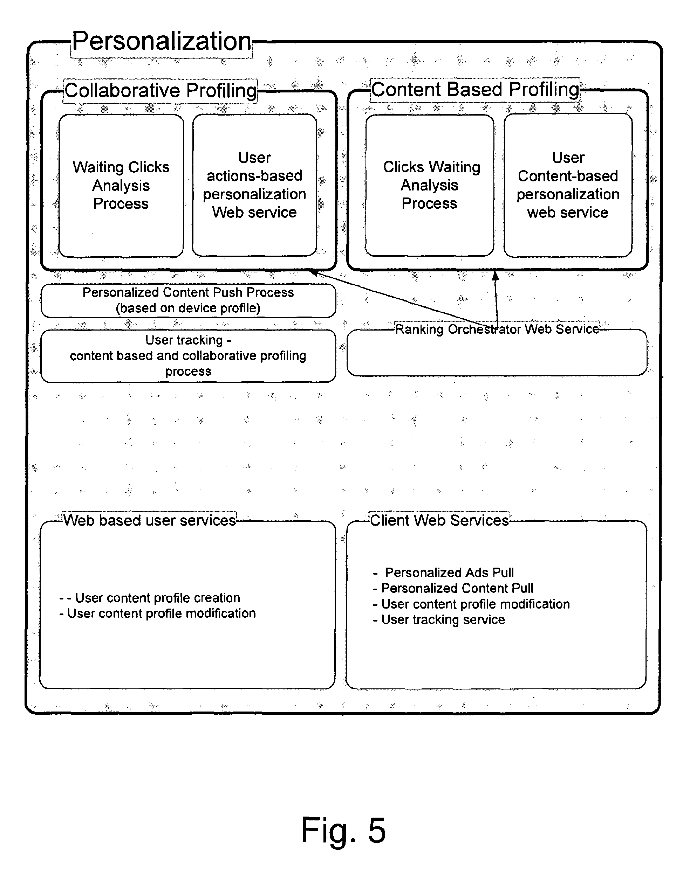

Fig. 5 is a schematic representation of Personalization process;

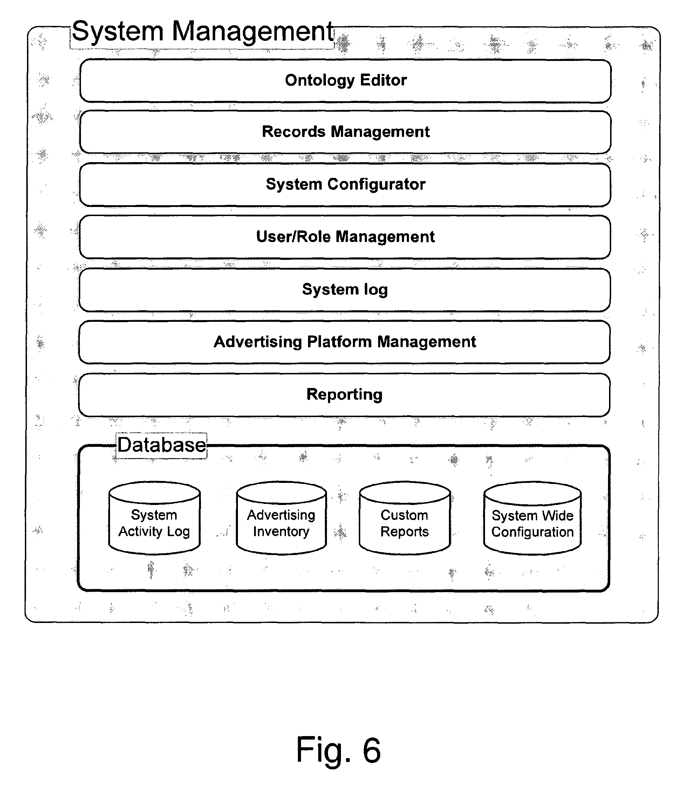

Fig. 6 illustrates the system management;

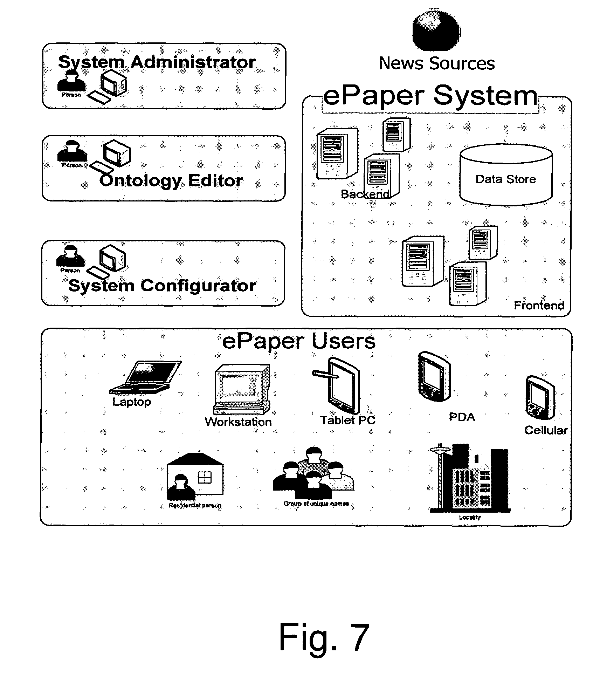

Fig. 7 shows illustrative examples of external interfaces suitable to be used in connection wit the invention; and

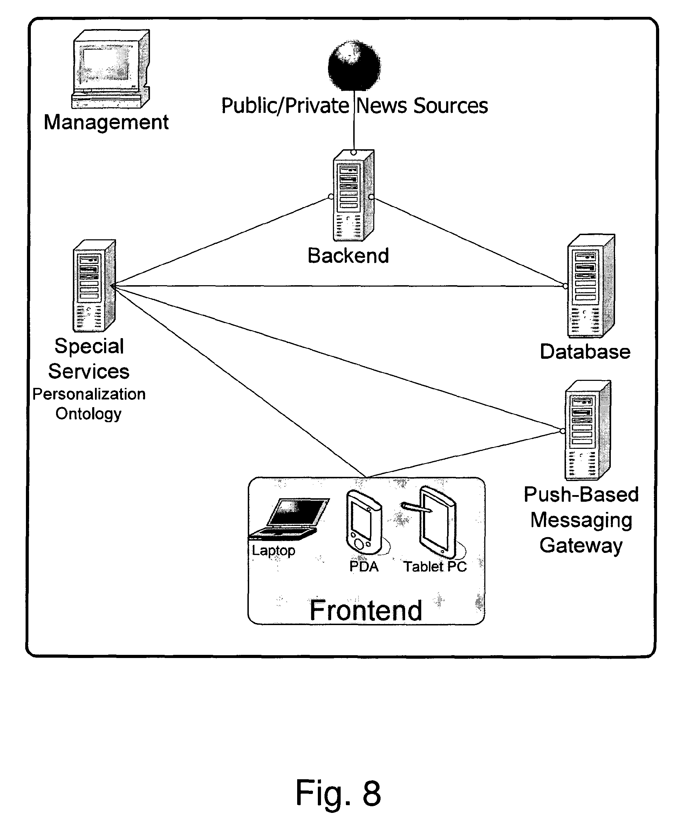

Fig. 8 is a schematic representation of the physical structure of a system according to a preferred embodiment of the invention.

### Detailed Description of Preferred Embodiments

### System Architecture

The system is composed architecturally of six major sub-systems: Content Manager, Personalization, Content Adaptation, Content Delivery, Systems Management and the client mobile device application/infrastructure (Client System).

### Content Management

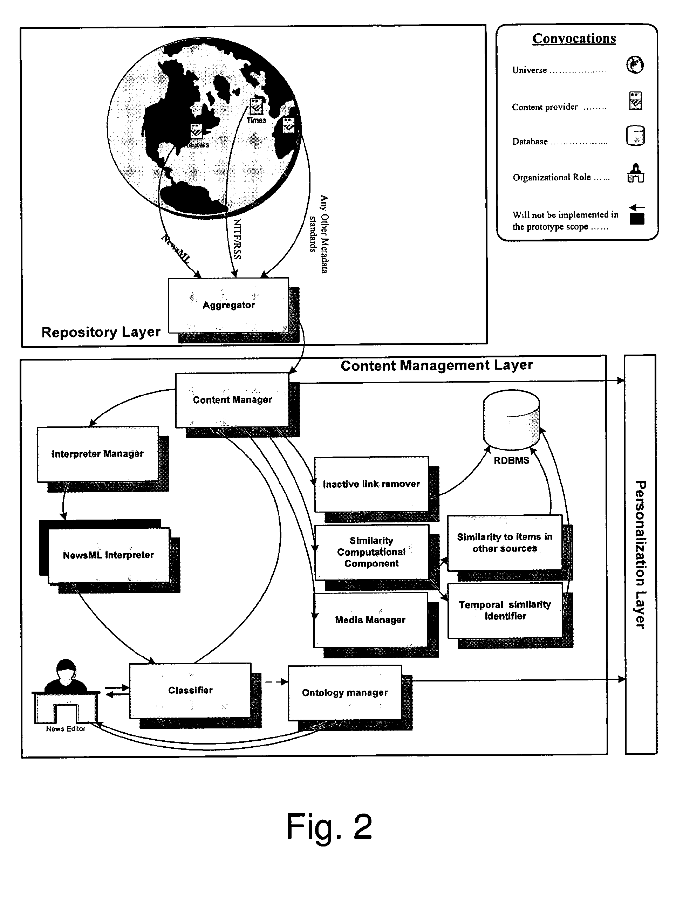

The Content Management subsystem (Fig. 2) handles news items from the point of retrieval from external news sources, up to the point they are ready to be personalized and delivered to the user.

Content aggregation includes the following operations:
- Detection of new items in news sources and fetching of items with extended information (multimedia);
- Conversion of different news formats into internal representation (Interpreter);
- Detection and normalization of similar news items;
- Indexing and categorization of news items (mapping to three levels of ontology);
- Handling "standard" newspaper editions; and
- Archiving.

### Content Adaptation

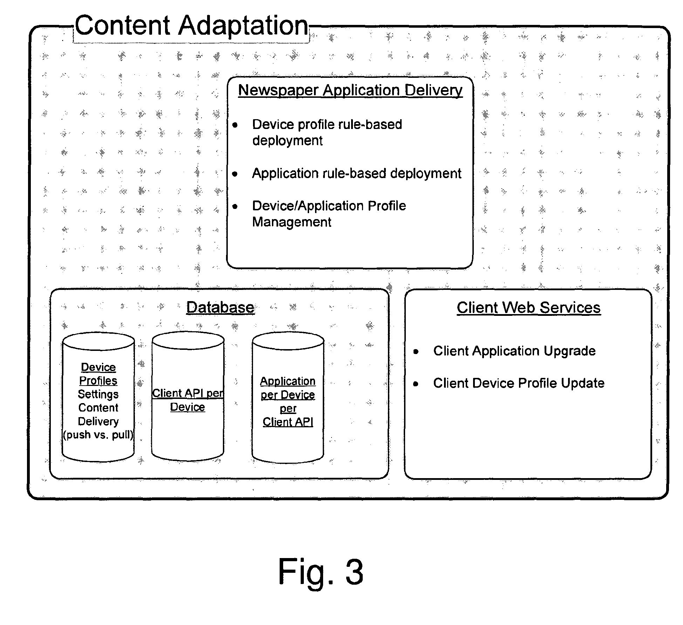

The Content Adaptation subsystem (Fig. 3) includes different processes and tools, to enable a high flexibility with supporting different devices with different characteristics. This subsystem includes the following functional areas:
- ePaper client side extended services for supporting applications designed in the designer;
- ePaper mobile emulator for testing purposes;
- ePaper mobile application delivery platform used to deploy applications/upgrades to device groups; and
- Remote client profile modification services.
- Client side dynamic newspaper layout generation based on device capabilities and varying importance level of news item.

### Client Side

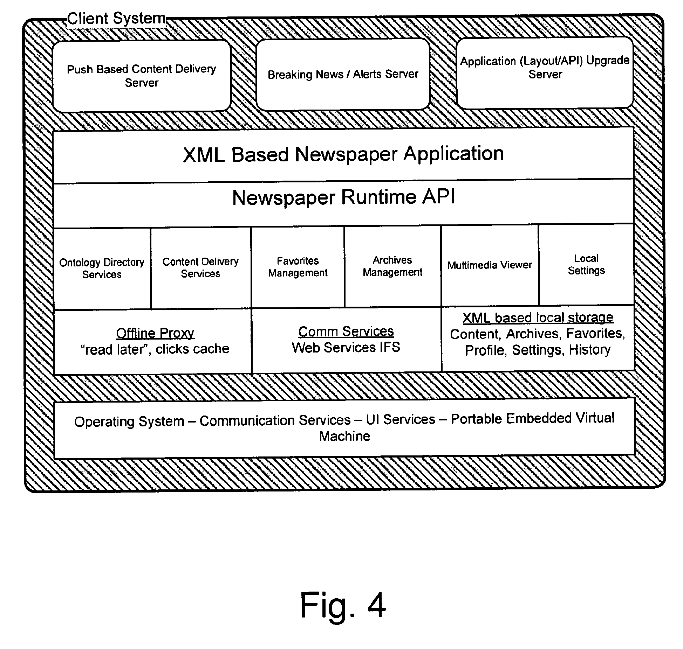

The client component within the content adaptation sub subsystem (Fig. 4) surrounds every functional unit planned to support the mobile application activity on the device as well as the mobile application itself.

This sub system includes the following functionality areas:
- Local servers receiving software upgrades;
- Newspaper runtime environment, the platform on which mobile applications designed are to run;
- Infrastructure services such as: offline proxy for maintaining connection-less environment, remote communication services and local XML persistence layer; and
- Client application services including favorites management, multimedia viewing, user settings management, and remote ontology browsing services that enable users to browse the news categorized to the ontology concepts, thus reaching news that are not personalized even if they are subscribed to the personalization services.

### Personalization

The Personalization sub-system is the area where the final relevancy-ranking of news based on user explicit and implicit preferences/behavior is conducted. Personalization is designed to work in two stages for lowering service time to users. The first stage is a group-wise offline processing activity, where group-based personalization is conducted. The second stage occurs in real-time during user requests for content, and is the place where final ranking of news per each specific user is conducted.

The Personalization subsystem is made of two separate but close processes: content-based filtering and the collaborative filtering. The personalization sub system is designed to work independently of the user click-tracking process, in order to enable scalability on the axis of multiple users' behavior tracking (i.e., many users clicking on an item in the same time).

All the activities within the personalization sub system result in a ranked list of news sent to the content delivery component for later dissemination to users.

Functional units within this subsystem include:
- On-demand content-based filtering and ranking;
- On-demand collaborative filtering and ranking;
- Offline content-based filtering group-wise preparation;
- Offline collaborating filtering preparation;
- User clicks tracking;
- User clicks analysis;
- Explicit and implicit content-based profile creation and modification; and
- Personalized ads delivery.

### System Management

The System Management layer is where all the administrative and system monitoring functionality take place. In addition to the system level facilities, other external interfaces to other common system management suites can be made available as well, as apparent to the skilled person, which is not described herein in detail, for the sake of brevity.

The system level functionality includes:
- System Logging;
- System Configuration Tools;
- Records Management;
- User/role management;
- System Statistics and Reporting;
- Ontology Editor Tool; and
- Advertising Platform Management.
- Backend alive monitoring capability
- Proactive configuration change notification at runtime

### Content Delivery Subsystem

The Content Delivery subsystem handles all user requests for content. The content delivery subsystem delivers content to the user on a push or pull basis, based on the selected content delivery rules. The content delivery subsystem is where all subsystems are activated in the process of content preparation.

The problem of deciding which delivery method to select, in view of the diversity of devices with different capabilities (bandwidth, storage, CPU), can be mitigated by the flexible delivery approach of the invention, which addresses this problem in an efficient manner.

Flexible Delivery mixes the two delivery methods described above and in turn activates selectively the "right" delivery method based on the target device capabilities. The process of delivery method selection and activation takes place at runtime and is fully configurable. A system administrator is provided, to define content delivery rules that describe what delivery method to activate for each device type (based on type or specific characteristics). For example, a content delivery rule can be set, describing a push-based policy for devices with very low network bandwidth. It is also possible to have content delivery rules describing a pull-based policy for WiFi based devices, which enjoy high network bandwidth.

The client software has to take into consideration this server side flexibility and to provide the user with a "smooth" user experience regardless of changed delivery method. This content delivery "awareness" should be embedded within the client API as well as UI. The way to obtain the abovementioned result is clear to the skilled person and, therefore, is not described herein in detail.

Another important benefit arising from the flexible approach is the fact that it does not require or impose changes on the general system architecture and keeps it neutral from the final delivery method to be used for each device.

### System Level Processes

A description of the high level system processes that occur within the system will now be provided for the purpose of illustration, using the examples to follow. Each process will be related to one or more requirements.

### User Tracking

The system handles tracking of user activities for personalization purposes. The goal is to track user's information interest in the fastest and most efficient way while not disturbing the user reading experience.

**Scenario Start:** John, our user, is in a reading session browsing through the headlines and news summaries:
- John clicks on specific news item to read the full article;
- The *proxy (*in the client sub-system*)* receives a notification about another click being made by the user;
- The proxy saves the click record in a packet of clicks to be sent to the server;
- The proxy in a different timed event checks whether the clicks packet has exceeded its configurable size (every five clicks for example);
- If the packet is full the proxy checks for connectivity:
**If there is connectivity:**
■ The client connects to the *user tracking web service* (in the Personalization sub-system) authenticating as the user and sending the packet of clicks;
■ The user tracking web service verifies the clicks packet consistency and writes clicks to click waiting table for later processing by the offline personalization engines;
■ The web service acknowledges client for successful completion;
■ The client clears sent packet of clicks;
**If there is no connectivity the proxy waits for the next connectivity evaluation cycle and keeps the clicks packet intact.**

### Switching from Pull to Push

The ePaper system provides the system operators with a configuration switch that allows them to switch content delivery method to a specific device group. The operator can decide that from a certain point of time every device in a defined device group will either receive news on a push basis or pull basis. The client side in turn provides the user with the same user experience while it checks whether the content has already been pushed or it should be retrieved from the server.

**Scenario Start:** Sam, our system operator, decides to switch all WiMax devices into push-based delivery and John, who owns a WiMax PDA, refreshes his personalized news afterwards.
- Sam opens up *configuration management web application* (in the system management subsystem) and creates a new content delivery rule
- In the new rule, Sam defines the content delivery method as push and attaches to it the WiMax device criteria. (He will be able also to set the rule to a specific device model.)
- Sam saves new rule into the system
- The content delivery offline process within the Content Delivery subsystem goes over the rules defined for delivery and encounters the new WiMax rule
- The content delivery offline process slices the users databases based on the criteria defined for the devices and creates a short list of users that should receive broadcast news
- The content delivery offline process goes over each user, prepares personalized news collection according to information preferences and according to content adaptation rules , to adjust the content to the specific device that the user holds, and finally unicasts each user with its own personalized news
- The client device *push-based content delivery local server* (in the client sub-system) gets a broadcast notification from the ePaper server
- The client saves the new personalized news items in local XMLI storage to be as news waiting for the user and notifies the user visually
- If the user is active with the device and sees the notification and accepts it then the client application switches the waiting news into active news and reloads the UI
- If the user ignored the notification and clicked "refresh" in his device to download news, a message box will prompt the user about the news waiting and the user will be able to either accept it or connect the server for the latest personalized news list

### User Morning Downloading Standard Edition

**Scenario Start:** John, our user, wakes up in the morning and powers up his ePaper device that was left turned off during the night
- The device upon startup creates a connection to ePaper servers
   o The server receives a query from a device to download a "standard" newspaper edition identifying with user+pass, device type and last update timestamp for the latest "standard" edition downloaded
   o The server first verifies the username+password to make sure the user is valid
   o Once authenticated the server calls the content delivery component with the request for a standard edition that is later than the supplied timestamp
   o The content delivery component goes over the active news table and the standard editions tables, where all editions are defined
   o If there is an update the client delivery component prepares to the client a vector with all news items of the new standard edition ordered as they were when downloaded from source
   o Before returning the vector of news to the client the server queries the content adaptation component with the client's device type in order to modify the content before it is downloaded to the user. The content adaptation component consults the user's local settings which are saved to the server as well as the specific device type content profile in order to prepare the content properly.
   o The prepared content is sent to the device
   o Client application receives vector of items together with edition publication date
   o Client application saves new edition publication date for later verification
   o Client application reloads UI with new items

### User Morning Downloading Personalized News

**Scenario Start:** John, our user, wakes up in the morning and powers up his ePaper device that was left turned of during the night
- The device upon startup creates a connection to ePaper servers
   o The server receives a query from the device to download the latest "personalized" news items. In this case the method for synchronizing already downloaded items is done via a checksum packet sent to the server describing the items downloaded during the user's former connection.
   o The server calls the content delivery component, which in turn calls the personalization engine supplying the username as a parameter.
   o The personalization engine calls the information filtering engine (which consists of the content-based and the collaborative filtering algorithms) supplying it the username.
   o The content-based filtering engine creates a "ranked" list of news items that are most relevant to the user at the specific point of time. The collaborative filtering engine creates a similar list but ranked differently, thanks to different algorithms used for calculating the list.
   o The personalization engine receives the two lists of ranked items and merges them also based on a unique algorithm.
   o The personalization engine returns to the content delivery component the list of items.
   o The content delivery component goes through the content adaptation process as described above
   o The server returns to the client the new list of items
   o The client updates the UI with the new items

### Device Software Update Process

**Scenario start:** John, our user, wakes up in the morning and powers up his ePaper device that was left turned of during the night
- The device, upon startup, creates a connection to ePaper servers
   o Connection one checks whether there is software update waiting. Software updates include updates to the ePaper client API and ePaper Client Application
   o If there is an update the device downloads the update and notifies the user that there is an update
   o If the user accepts the update then the local client software updater replaces the software of the client and restarts the application

### New Published News Items in the system

**Scenario start:** The *aggregator* (Inside Content Manager) goes over our list of known news sources and checks each source for new items.
- The *aggregator* identifies new news item published
- The *aggregator* downloads news item including all attached multimedia objects based on news source format
- The *aggregator* adds the news item to a waiting table for later processing
- *Content Manager* goes over waiting table to see whether there are news items waiting for processing
- *Content Manager* encounters a new news item in the NewsML format (for example)
- *Content Manager Interpreter Manager* identifies the news item is in the NewsML format and sends it to the NewsML Interpreter component for extracting the required pieces of information
- *Content Manager* sends the news item after content interpretation into the classifier component
- *Classifier* component creates a content-based profile for the news item based on the meta data provided in the NewsML file
- *Classifier* extracts important keyword from content of news item in case meta data is missing and builds the content-based profile of the news item
- *Content Manager* receives the news item from classifier together with its content-based profile for further processing
- *Content Manager* computes similarity for news item to evaluate the similarity of the news item with other active news items (to enable removal of duplicates)
- Once *Content Manager* decided item is new and unique it writes the new news item into the active news table as ready for personalization and delivery to users.

### User Offline Experience

**Scenario start:** John, our user, before going into his plane clicks on "I am going offline" button in order to download full stories and full multimedia objects

### Adapting Content to User

The content adaptation component gets into action before content is returned or pushed to the user. The content adaptation mechanism takes into consideration the device type being used by the user, the version of installed client UI software, the version of installed client API and the local relevant settings the user has selected to customize on the device which override device default content adaptation rules, which are disclosed, for example, in a co-pending Israeli patent application having an attorney's docket No. 22036/07.

### Delivering Ads

The ads preparation mechanism gets into action before content is returned or pushed to the user. Ads are selected based on geographical and other demographic parameters defined in the ads management system for a specific banner.

### Offline Personalization Flow

The content-based and collaboration personalization engines split their work into two parts: an offline activity that prepares content for user based personalization and the on-demand final stage of personalization.

This design is aimed to lower response time upon user requests for personalized news. All offline personalization activities are operating on groups of users and not individuals to prevent system hog. Among the different activities the offline personalization process includes there are: user content-based profile modification, based on individual user clicks, news item click through modification based on clicks on an item, preparation of pre-ranked list for each top level category based on content-based filtering algorithm, preparation of similar groups in terms of information interests to be used by collaborative filtering mechanism.

### External Interfaces

Fig. 10 illustrates the interface of the system with the external world. The system interacts with news sources (news agencies, newspapers, etc.), with its users, and with human administrators and operators on different levels. The system administrator that is responsible for the management and administrative tasks of the system, the ontology editor who may modify the ontology, the system configurator, who can calibrate different configurable parameters (such as push or pull rules, thresholds for personalization, etc.).

### Client Services

The system provides web based forms for users to register their ePaper account as well as to define and modify their content-based profile and demographic data in any point of time. Content preferences modification are possible also from the device for convenience purposes.

### Storage

The storage to be used in the system is:
- RDBMS (MySQL) for system level information (news, users, taxonomy, etc.)
- File system for large binary objects
- XML as a client side persistency medium holding user customizations and content

### Configuration

The following areas in the system are configurable:
- Personalization algorithms weighting and factors
- News processing rules for determining processing flow
- Mobile application per device, upgrade cycle and click tracking
- System logging
- News life cycle (time in active table, time in archives, personalization or not (regular edition)
- Advertising platform
- Push vs. pull operating mode for content delivery sub system
- Multimedia content adaptation processes
- Main taxonomy
- Content management subsystem execution environment definition

### Physical Structure

The following physical structure illustrates a basic composition for a production environment..

### System Level Attributes

### Scalability

The system is scalable on the following dimensions:
- Variety of user devices with different characteristics
- Number of users accessing news at the same time
- Number of news items prepared/ news sources tracked
   - Number of users being interactive with their ePaper
   - Number of standard editions being aggregated and delivered to users

### Robustness

The system design has strong emphasis on robustness in the following dimensions:
- High-availability of news retrieval service
- Consistent mobile application behavior during offline/online time, i.e. click tracking
- High availability of user extended services
- Redundancy on user related information including extended profile (favorites, application customization...)

### Security and Privacy

The system holds few "sensitive" information items on the user such as his/her past information preferences. Personalization is authenticated against unique device key and username/password, to make sure that only the right users receive their personalized content. Content delivery mechanism can be implemented as SSL service over HTTP to secure the connection.

Internal database security is handled by similar measures taking place in operator production environment.

### Extensibility

The system is extensible in the following dimensions:
- Number of mobile devices supported by the system
- Content preparation process (including handling of other languages)
- Number of news sources tracked
- Number of news formats supported
- Number of mobile applications available to user (skins)
- System level reporting and statistics level
- Main ontology - NewsCodes - this ontology can be extended without breaking the consistency of the news flow and personalization

All the above description of preferred embodiments has been provided for the purpose of illustration and is not meant to limit the invention in any way. Many modifications and additions and can be provided, without exceeding the scope of the invention.

## Claims

1. A system for aggregating commercial news and for delivering desired content to a user, comprising the following sub-systems: Content Manager, Personalization, Content Adaptation, Content Delivery, Systems Management and the client mobile device application/infrastructure (Client System).

2. The system of claim 1, wherein the Content Management subsystem handles news items from the point of retrieval from external news sources, up to the point they are ready to be personalized and delivered to the user, said Content Management subsystem performing the following operations:
a) Detection of new items in news sources and fetching of items with extended information (multimedia);
b) Conversion of different news formats into internal representation (Interpreter);
c) Detection and normalization of similar news items;
d) Indexing and categorization of news items (mapping to ontology);
e) Handling "standard" newspaper editions; and
f) Archiving.

3. The system of claim 1 or 2, wherein the Content Adaptation subsystem includes the following functional areas:
- ePaper mobile application delivery platform used to deploy applications/upgrades to device groups; and
- Remote client profile modification services.

4. The system of claim 3, wherein the client component within the Content Adaptation subsystem surrounds every functional unit that supports the mobile application activity on the device as well as the mobile application itself, and includes the following functionality areas:
- Local servers receiving software upgrades;
- Newspaper runtime environment, the platform on which mobile applications designed are to run;
- Infrastructure services such as: offline proxy for maintaining connection-less environment, remote communication services and local XML persistence layer; and
- Client application services including favorites management, multimedia viewing, user settings management, and remote ontology browsing services that enable users to browse the news categorized to the ontology concepts, thus reaching news that are not personalized even if they are subscribed to the personalization services.

5. The system of claim 1, wherein the Personalization subsystem performs the final relevancy-ranking of news based on user explicit and implicit preferences/behavior.

6. The system of claim 5, wherein Personalization works in two stages for lowering service time to users.

7. The system of claim 6, wherein the first stage is a group-wise offline processing activity, where group-based personalization is conducted, and the second stage occurs in real-time during user requests for content and performs the final ranking of news per each specific user.

8. The system of claim 5, wherein the Personalization subsystem is made of two separate but close processes which comprise the content-based filtering and the collaborative filtering.

9. The system of claim 5, which includes:
- On-demand content-based filtering and ranking;
- On-demand collaborative filtering and ranking;
- Offline content-based filtering group-wise preparation;
- Offline collaborating filtering preparation;
- User clicks tracking;
- User clicks analysis;
- Explicit and implicit content-based profile creation and modification; and
- Personalized ads delivery.

10. The system of claim 1, wherein the Content Delivery subsystem delivers content to the user on a push or pull basis, based on the selected content delivery rules.

11. The system of claim 10, wherein delivery is performed by the flexible delivery approach.
